# FASCICULE DE BREVET EUROPEEN

(11) **EP 2 825 617 B1**
(45) Date de publication et mention de la délivrance du brevet: **07.11.2018**
(21) Numéro de dépôt: 13712849.2
(22) Date de dépôt: 26.02.2013
(51) Int. Cl.: C10G 3/00, C10G 45/00, C10G 47/00, C10G 65/04, C10G 65/12, C10G 1/00, B01J 37/20, B01J 21/04, B01J 21/18, B01J 23/86, B01J 23/883, B01J 37/00, C08H 8/00

(54) **PROCEDE DE VALORISATION DE BIO-HUILES EN CARBURANTS HYDROCARBONES**
VERFAHREN ZUR AUFWERTUNG VON BIOÖLEN IN KOHLENWASSERSTOFFBRENNSTOFFEN
METHOD FOR UPGRADING BIO-OILS INTO HYDROCARBON FUELS

(30) Priorité: 12.03.2012 FR 1200744
(43) Date de publication de la demande: 21.01.2015
(73) Titulaire: IFP Energies nouvelles, 92500 Rueil-Malmaison (FR)
(72) Inventeur: DAUDIN, Antoine, F-69960 Corbas (FR); QUIGNARD, Alain, F-38150 Roussillon (FR); THINON, Olivier, F-42300 Roanne (FR)
(74) Mandataire: IFP Energies nouvelles
(86) Numéro de dépôt international: PCT/FR2013/050389
(87) Numéro de publication internationale: WO 2013/135986

(56) Documents cités:
- WO-A2-2012/035410
- US-A1- 2009 294 324
- US-A1- 2011 119 994
- "Dynamotive Produces Renewable Gasoline and Diesel from Biomass in Three-Stage Process: Pyrolysis, Hydroreforming, Hydrotreating", Green car congress , 25 avril 2009 (2009-04-25), pages 1-3, XP002688088, Extrait de l'Internet: URL:http://www.greencarcongress.com/2009/0 4/dynamotive-bingo-20090425.html [extrait le 2012-11-27]

## Description

### Domaine de l'invention

La présente invention concerne un procédé de production de produits hydrocarbonés, en particulier des produits chimiques et/ou des produits hydrocarbonés incorporables dans le pool des carburants liquides appelés biocarburants, à partir de liquides issus de la biomasse et en particulier à partir de biomasse liquéfiée issue de la pyrolyse de la biomasse, également appelée bio-huile. De manière plus spécifique, l'invention concerne un procédé de valorisation de bio-huiles en produits hydrocarbonés incorporables dans le pool des carburants liquides pour moteurs destinés à des applications de transport aérien, maritime ou terrestre, au moyen d'un procédé catalytique en deux étapes, ledit procédé comprenant une étape d'hydroreformage, suivie d'une étape d'hydrotraitement et/ou d'hydrocraquage et/ou d'hydroconversion.

### État de la technique

Les bio-huiles sont des produits liquides obtenus par liquéfaction thermochimique de biomasse cellulosique. Les procédés thermochimiques convertissent généralement la biomasse en produits liquides, gazeux et solides. Parmi ces procédés, ceux dits de pyrolyse rapide tendent à maximiser le rendement en liquide. Lors d'une pyrolyse rapide, la température de la biomasse, éventuellement finement divisée, est rapidement élevée à des valeurs supérieures à environ 300°C et de préférence comprise entre 300 et 900°C et les produits liquides sont condensés sous forme de bio-huile. Ringer et al. (Large-Scale Pyrolysis Oil Production: A Technology Assessment and Economic Analysis, M. Ringer, V. Putsche, and J. Scahill, NREL Technical Report NREL/TP-510-37779, Novembre 2006) ont étudié les différentes technologies mises en oeuvre pour la pyrolyse rapide de biomasse à grande échelle. Elles comprennent des lits fluidisés bouillonnants, des lits fluidisés circulants, des réacteurs de pyrolyse ablative, de pyrolyse sous vide et de pyrolyse à cône rotatif.

A première vue, les bio-huiles issues de la pyrolyse rapide de la biomasse pourraient en principe fournir des carburants liquides renouvelables à bas coût ; en effet, leur utilisation comme combustible pour chaudières, turbines à gaz stationnaires et diesels a été décrite. De plus, la pyrolyse rapide a été développée industriellement à relativement grande échelle, de l'ordre de plusieurs centaines de tonnes par jour. Cependant, cette technologie n'a pas encore suscité beaucoup d'intérêt commercial.

En effet, une bio-huile et en particulier une bio-huile issue de la pyrolyse rapide de la biomasse est un mélange complexe de produits hydrocarbonés polaires fortement oxygénés obtenus à partir de la rupture de biopolymères, et présentant des propriétés physiques et chimiques limitant son utilisation directe en tant que biocarburant.

Les bio-huiles de pyrolyse présentent des propriétés indésirables telles que: (1) la corrosivité due à leur forte teneur en eau et en acide organique; (2) un pouvoir calorifique spécifique faible du fait de la teneur élevée en oxygène, typiquement de l'ordre de 40 % poids ; (3) l'instabilité chimique due à l'abondance de groupes fonctionnels réactifs tels que le groupe carbonyle, qui peut entraîner unepolymérisation en cours de stockage et par suite une séparation de phases ; (4) une viscosité et une tendance à la séparation de phases relativement élevées dans des conditions de cisaillement élevé, dans un injecteur par exemple ; (5) une incompatibilité avec des carburants à base d'hydrocarbures classiques du fait de leur insolubilité dans ceux-ci ; (6) des particules solides de charbon issues de la pyrolyse, qui seront toujours présentes dans les bio-huiles non filtrées à un degré plus ou moins élevé, peuvent provoquer le bouchage d'injecteurs et de conduites. Tous ces aspects se combinent pour rendre la manipulation, le transport, le stockage et la mise en oeuvre des bio-huiles difficiles et coûteux, rendant ainsi leur intégration dans les systèmes et les technologies actuels de production de chaleur et d'énergie problématique.

La viabilité économique de la production de bio-huiles pour des applications énergétiques dépend ainsi de la découverte de méthodes adaptées en vue de leur valorisation en un carburant liquide de qualité supérieure, à un coût suffisamment faible. En effet, des efforts considérables ont été réalisés au cours des dernières années pour rechercher des technologies pratiques susceptibles de surmonter tout ou partie des inconvénients mentionnés ci-avant.

L'une des approches proposées consiste à estérifier et à acétyler les bio-huiles avec des alcools tels que l'éthanol et le butanol comme par exemple dans la demande de brevet EP 0 718 392. Les produits réactionnels présentent néanmoins toujours une forte acidité et une teneur en eau élevée, tandis que l'augmentation du pouvoir calorifique spécifique est faible. De plus, les produits eux-mêmes tendent à être chimiquement instables et réactifs.

Une autre approche consiste à émulsifier la bio-huile en carburants diesel en utilisant des agents tensioactifs appropriés comme par exemple dans le brevet US 5,820,640. Bien que le problème de la compatibilité avec les carburants hydrocarbonés industriels soit ainsi résolu, de nouveaux problèmes tels que la stabilité de l'émulsion se présentent, tandis que ceux liés à la corrosivité et à la stabilité chimique subsistent.

Dans une autre approche encore, les vapeur de bio-huile non-condensée issues de la pyrolyse catalytique rapide de la biomasse solide sont partiellement désoxygénées par transformation en présence de catalyseurs zéolithiques afin de produire directement des aromatiques de faible poids moléculaire tels que les BTX (benzène, toluène, xylène) comme par exemple dans le brevet US 4,308,411. Cependant, les catalyseurs zéolithiques sont acides et l'oxygène est éliminé dans une large mesure par déshydratation pour donner de l'eau. En conséquence, du fait de l'insuffisance molaire inhérente d'hydrogène par rapport à l'oxygène et au carbone dans la bio-huile, les rendements en fraction liquide organique sont relativement faibles et on observe une formation très importante de coke, ce qui accroît la difficulté technologique et affecte les performances économiques.

Une approche indirecte consiste à gazéifier la bio-huile (et/ou le co-produit de carbonisation) en gaz de synthèse, puis à effectuer une synthèse Fischer-Tropsch des hydrocarbures à chaîne longue ou des oléfines issus du gaz de synthèse dans le cadre d'un procédé dit BTL (Biomass To Liquid) (par exemple le procédé Bioliq décrit par Henrich et al. (Cost estimate for biosynfuel production via biosyncrude gasification, E. Henrich, N. Dahmen and E. Dinjus, Biofuels, Bioprod. Bioref. 3:28-41 (2009)). Les rendements globaux en hydrocarbures à partir de biomasse sont néanmoins relativement faibles et les coûts d'investissement sont élevés. De plus, les volumes minimaux à partir desquels on s'attend à ce que les procédés BTL soient économiques sont importants par rapport à la disponibilité locale typique de la biomasse, ce qui requiert une logistique complexe en vue de l'approvisionnement en biomasse, avec des coûts de transport significatifs.

Au cours des vingt dernières années, l'approche consistant à effectuer un hydrotraitement direct de la bio-huile en vue de la convertir en hydrocarbures ou en liquides oxygénés stables a fait l'objet d'études intensives. Elliott a publié une étude détaillée de ces nombreux développements historiques, y compris le travail réalisé avec des composés modèles connus pour être présents dans les bio-huiles (Historical Developments in Hydroprocessing BioOils, D. C. Elliott, Energy & Fuels 2007, 21, 1792-1815).

L'un des obstacles majeurs à l'hydrotraitement catalytique directe des bio-huiles réside dans leur propension à polymériser lorsqu'elles sont soumises à des températures supérieures à environ 100°C, ce qui donne lieu à la formation de solides à des températures supérieures à environ 140°C, avec des conséquences telles que le colmatage des lignes de charge, fours et réacteurs ainsi que la désactivation rapide, du catalyseur, voire le colmatage de l'entrée du réacteur.

Ces difficultés peuvent être partiellement surmontées en hydrotraitant uniquement la portion thermiquement résistante de la bio-huile. Ainsi, en ajoutant de l'eau à la bio-huile, elle peut être séparée en une phase aqueuse et en une phase visqueuse de masse volumique supérieure, généralement comprise entre 20 et 30 %, appelée lignine pyrolytique car amplement dérivée de la fraction ligneuse de la charge de pyrolyse de la biomasse. Comme la lignine pyrolytique est riche en matériau phénolique, elle présente une stabilité thermique largement supérieure à celle de la portion de la bio-huile dérivée de carbohydrates, et elle est par conséquent plus facile à soumettre à un hydrotraitement catalytique sans formation de solides. C'est l'approche suivie par Piskorz et al. (Conversion of Lignins to Hydrocarbon Fuels, J. Piskorz, P. Majerski, D. Radlein, and D. S. Scott, Energy & Fuels, Vol 3, 723-726, 1989) et, plus récemment, par Marker et Petri dans le brevet US 7,578,927. Ce procédé présente l'inconvénient de la mise en oeuvre d'une étape de séparation de la bio-huile en amont de l'étape d'hydrotraitement catalytique et de l'obligation de traiter les deux fractions résultantes séparément. Le procédé résultant est donc complexe et sa mise en oeuvre entraine des pertes en rendement massique et énergique, ainsi qu'en coût opératoire.

L'hydrotraitement de la bio-huile complète, c'est-à-dire n'ayant subi aucune étape de séparation préalable a été envisagée. Le brevet US 4,795,841 propose un procédé d'hydrotraitement en deux étapes de la bio-huile complète, la bio-huile étant utilisée seule, c'est à dire pas en mélange avec d'autres flux, dans la première étape duquel la stabilité thermique globale de la bio-huile est améliorée par hydrogénation catalytique à une température environ égale à 250°C.

Cependant, ce procédé d'hydrotraitement en deux étapes entraine la formation de solides et à la désactivation rapide du catalyseur. L'hydrotraitement des bio-huiles est également difficile du fait de la formation de multiples phases organiques, en plus de la phase aqueuse. Par ailleurs, la cinétique de l'hydrogénation est lente, notamment aux températures relativement basses requises pour la stabilisation thermique des bio-huiles. La consommation d'hydrogène est en outre élevée.

Les demandes de brevet US 2009/0253948 A1 et US 2009/0294324 A1 divulgent un procédé de conversion d'huile de pyrolyse dérivée de biomasse en un carburant liquide au moyen d'une désoxygénation en deux étapes de l'huile de pyrolyse et séparation des produits, dans lequel le produit hydrocarboné final ainsi que les fractions issues de la distillation finale et bouillant à des températures d'ébullition correspondant aux fraction valorisables dans les pools essence, kérosène et gazole, peuvent être recyclés. Il n'apporte néanmoins pas d'enseignement sur le haut degré de dispersion ou de solubilisation de l'huile de pyrolyse dans un milieu hydrocarboné, avec les avantages d'une forte augmentation des vitesses de réaction et de la durée de vie du catalyseur.

WO 2012/035410 A2 décrit un procédé de valorisation d'huile biologique consistant à mettre un mélange dispersé d'hydrocarbures liquides, d'huile biologique et d'huile biologique partiellement valorisée en contact avec un catalyseur contenant un métal de transition et du gaz hydrogène à une température d'environ 330 °C et une pression d'environ 1700 psi (11,7 MPa) pendant une période de temps suffisante pour réduire la teneur en oxygène de l'huile biologique de façon à ce qu'elle se sépare au refroidissement en une phase aqueuse et une phase organique, et facultativement, à soumettre en outre la phase organique à un hydrotraitement, hydrocraquage ou craquage catalytique pour produire un mélange d'hydrocarbures dont le point d'ébullition se trouve dans la gamme de l'essence, du diesel et carburéacteur.

Il reste néanmoins à trouver un procédé d'hydrotraitement efficace. Les difficultés rencontrées trouvent leur origine dans la polymérisation thermique rapide de la bio-huile, qui conduit à des bouchages de lignes et des équipements réactionnels ainsi qu'à une désactivation rapide du catalyseur. En d'autres termes, aux températures typiquement requises pour l'hydrotraitement des bio-huiles, les réactions de polymérisation sont sensiblement plus rapides que les réactions d'hydrotraitement, ce qui entraîne finalement la formation de coke.

Il existe donc un besoin pour un procédé amélioré d'hydrotraitement des bio-huiles qui minimise la formation de solides, la désactivation du catalyseur et la consommation d'hydrogène, et maximise le rendement en huile désoxygénée produite. Il est également souhaitable de maximiser la fraction du produit hydrocarboné dont le point d'ébullition se situe dans l'intervalle d'ébullition des carburants utiles tels que l'essence, le kérosène ou le gazole.

### Résumé de l'invention

La présente invention concerne un procédé de production de produits hydrocarbonés à partir d'une charge comprenant au moins une bio-huile non prétraitée, ladite charge étant introduite dans au moins les étapes suivantes :
- une première étape d'hydroreformage en présence d'hydrogène et d'un catalyseur d'hydroreformage comprenant au moins un métal de transition choisi parmi les éléments des groupes 3 à 12 de la classification périodique et au moins un support choisi parmi les carbures de silicium, les silices, les alumines de transition, les silices alumine, l'oxyde de zirconium, l'oxyde de cérium, l'oxyde de titane et les aluminates de métaux de transition, pris seul ou en mélange, pour obtenir au moins un effluent liquide comprenant au moins une phase aqueuse et au moins une phase organique,
- une deuxième étape d'hydrotraitement et/ou d'hydrocraquage d'au moins une partie de la phase organique de l'effluent issu de la première étape d'hydroreformage pour obtenir un effluent hydrocarboné,
dans lequel au moins une partie de la phase organique de l'effluent issu de la première étape d'hydroreformage est recyclée dans ladite première étape d'hydroreformage, en mélange avec ladite charge comprenant au moins une bio-huile, avec un taux de recycle égal au rapport du débit massique de ladite phase organique sur le débit massique de la bio-huile non prétraitée compris entre 0,05 et 2 et dans lequel l'effluent hydrocarboné issu de l'étape d'hydrotraitement et/ou d'hydrocraquage n'est pas recyclé dans ladite première étape d'hydroreformage.

Un avantage de la présente invention est de fournir un procédé en deux étapes permettant la production d'un effluent hydrocarboné stable incorporable au pool carburant, à partir d'une charge comprenant au moins une bio-huile non prétraitée, comprenant une teneur en oxygène inférieure à 5% et de préférence inférieure à 1% poids et une teneur en eau inférieure à 0,1% poids par rapport à la masse totale dudit effluent hydrocarboné, sans formation significative de coke ou de polymères de bio-huile, avec de faibles vitesses de désactivation du catalyseur d'hydroreformage, des taux de conversion sensiblement améliorés et une consommation en hydrogène réduite.

Un autre avantage de la présente invention est de traiter une charge comprenant au moins une bio-huile qui n'a subi aucune étape de prétraitement. Le coût opératoire du procédé selon l'invention est donc réduit.

Un autre avantage de la présente invention est de fournir un procédé présentant une grande flexibilité vis à vis de la nature des liquides dérivés de la biomasse utilisable comme charge comprenant au moins une bio-huile non prétraitée, en particulier des liquides issus de la pyrolyse de la biomasse, qui peuvent présenter de larges gammes de viscosité, de teneur en eau et de degré de polymérisation, selon l'origine de la biomasse et le procédé de pyrolyse mise en oeuvre.

Le procédé inventif divulgué ici satisfait l'ensemble de ces critères.

### Description détaillée de l'invention.

Conformément à l'invention, la bio-huile de la charge traitée dans le procédé selon l'invention est non prétraitée c'est-à-dire que ladite bio-huile n'a subi aucune étape de prétraitement autre que la pyrolyse. En particulier, ladite bio-huile n'a subit aucune étape de prétraitement destinée à diminuer sa teneur en métaux, sa teneur en solides, sa teneur en eau ou sa teneur en acide.

Une bio-huile est un mélange complexe de composés oxygénés, obtenus à partir de la rupture de biopolymères présents dans la biomasse d'origine. Dans le cas de la biomasse lignocellulosique, les structures issues de ces trois principaux composants, la cellulose, l'hémicellulose et la lignine, sont bien représentées par les composants de la bio-huile.

En particulier, une bio-huile est un produit hydrocarboné polaire fortement oxygéné qui comporte généralement au moins 10 % poids d'oxygène, de préférence de 10 à 60 % poids, et de manière préférée de 20 à 50 % poids d'oxygène par rapport à la masse totale de ladite bio-huile. En général, les composés oxygénés sont des alcools, des aldéhydes, des esters, des éthers, des acides organiques et des composés oxygénés aromatiques. Une partie de l'oxygène est présente sous forme d'eau libre représentant au moins 5% poids, de préférence au moins 10 % poids et de manière préférée au moins 20 % poids de la bio-huile. Ces propriétés rendent la bio-huile totalement immiscible avec les hydrocarbures, même avec les hydrocarbures aromatiques qui contiennent généralement très peu ou pas d'oxygène.

Les bio-huiles sont avantageusement issues de la biomasse de préférence choisies parmi les plantes, les herbes, les arbres, les copeaux de bois, les graines, les fibres, les enveloppes de graines, les plantes aquatiques, le foin et les autres sources de matériaux lignocellulosiques, tels que par exemple ceux provenant de déchets municipaux, de déchets agro-alimentaires, de déchets forestiers, de résidus d'abattage, de déchets agricoles et industriels (tels que par exemple les bagasses de canne à sucre, les déchets issus de la culture de palmier à huile, les sciures ou les pailles). Les bio-huiles peuvent également provenir de pâte à papier et de sous-produits du papier recyclé ou non ou de sous produits issus de papeteries.

Les bio-huiles sont avantageusement obtenues par liquéfaction thermochimique de la biomasse, de préférence par pyrolyse, et de manière préférée, par pyrolyse rapide, lente avec ou sans catalyseur (en présence de catalyseur, on parle alors de pyrolyse catalytique). La pyrolyse est une décomposition thermique en l'absence d'oxygène, avec craquage thermique des charges en gaz, liquide et solide. Un catalyseur peut avantageusement être ajouté pour renforcer la conversion au cours de la pyrolyse dite catalytique. La pyrolyse catalytique donne généralement une bio-huile présentant une teneur en oxygène inférieure à celle de la bio-huile obtenue par décomposition thermique, mais le rendement en bio-huile est généralement plus faible. La sélectivité entre le gaz, le liquide et le solide est en rapport avec la température de réaction et le temps de séjour de la vapeur. Les procédés de pyrolyse de la biomasse, notamment la pyrolyse rapide, sont bien décrits dans la littérature tel que par exemple dans A.V. Bridgewater, H. Hofbauer and S. van Loo, Thermal Biomass Conversion, CPL Press, 2009, 37-78.

La pyrolyse lente est avantageusement réalisée à une température comprise entre 350 et 450°C et de préférence de l'ordre de 400°C et avec un temps de séjour long compris entre quelques minutes et quelques heures qui favorise la production d'un produit solide également appelé produit de carbonisation ou charbon de bois. En particulier, la pyrolyse lente permet généralement la production de 35 % poids de gaz, 30 % poids de liquide et 35 % poids de produit de carbonisation. Les procédés de gazéification opérant à des températures très élevées, de préférence supérieures à 800°C, favorisent la production de gaz, et en particulier de plus de 85 % poids de gaz. La pyrolyse intermédiaire est avantageusement réalisée à une température généralement comprise entre 450 et 550°C et avec un temps de séjour de la vapeur court, de préférence compris entre 10 et 20 secondes qui favorise le rendement en liquide. En particulier, la pyrolyse intermédiaire permet généralement la production de 30 % poids de gaz, 50 % poids de liquide et 20 % poids de produit de carbonisation.

La pyrolyse rapide est avantageusement réalisée à une température généralement comprise entre 450 et 550°C et avec un temps de séjour de la vapeur très court, de préférence compris entre 0,5 et 2 secondes qui maximise le rendement en liquide : en particulier, la pyrolyse rapide permet généralement la production de 10-20 % poids de gaz, 60-75 % poids de liquide et 10-20 % poids de produit de carbonisation. Les rendements en liquides les plus élevés sont donc obtenus dans le cadre des procédés de pyrolyse rapide, avec un rendement en liquides pouvant atteindre jusqu'à 75 % poids.

De préférence, les bio-huiles mises en oeuvre dans le procédé selon la présente invention sont obtenues par pyrolyse rapide de la biomasse.

La charge traitée dans le procédé selon l'invention comprend de préférence une teneur en bio-huile comprise entre 10 et 100% poids par rapport à la masse totale de ladite charge.

La charge comprenant au moins une bio-huile non prétraitée utilisée dans le procédé selon l'invention peut également avantageusement contenir d'autres composés issus de la biomasse, lesdits composés étant avantageusement choisis parmi les huiles végétales, les huiles d'algues ou algales, les huiles de poissons, les graisses d'origine végétale ou animale, et les alcools issus de la fermentation des sucres de la biomasse, ou des mélanges de telles charges, prétraitées ou non. Les huiles végétales ou les huiles dérivées de graisses animales comportent essentiellement des structures chimiques de type triglycérides que l'homme du métier connait également sous l'appellation tri-ester d'acides gras ainsi que des acides gras libres, dont les chaînes grasses contiennent un nombre d'atomes de carbone compris entre 9 et 25.

Lesdites huiles végétales peuvent avantageusement être brutes ou raffinées, totalement ou en partie, et issues des végétaux choisis parmi le colza, le tournesol, le soja, le palmier, l'olive, la noix de coco, le coprah, le ricin, le coton, les huiles d'arachides, de lin et de crambe et toutes les huiles issues par exemple du tournesol ou du colza par modification génétique ou hybridation, cette liste n'étant pas limitative. Lesdites graisses animales sont avantageusement choisies parmi le lard et les graisses composées de résidus de l'industrie alimentaire ou issus des industries de la restauration. Les huiles de fritures, les huiles animales variées comme les huiles de poisson, le suif, le saindoux peuvent également être utilisées.

Ladite charge comprenant au moins une bio-huile peut également avantageusement être traitée en mélange avec au moins une charge hydrocarbonée dérivée du pétrole et/ou du charbon. La charge hydrocarbonée dérivée du pétrole peut avantageusement être choisie parmi les distillats de distillation directe sous vide, les distillats sous vide provenant d'un procédé de conversion, tels que ceux issus de procédés de cokéfaction, d'hydroconversion en lit fixe ou d'hydrotraitement de fractions lourdes en lit bouillonnant, les produits issus d'unités de craquage catalytique fluide, tels que par exemple le gasoil léger de craquage catalytique (LCO) de différentes origines, le gasoil lourd de craquage catalytique (HCO) de différentes origines et toute fraction de distillat de craquage catalytique fluide présentant généralement un intervalle de distillation d'environ 150°C à environ 370°C, les extraits aromatiques et les paraffines obtenus lors de la préparation d'huiles lubrifiantes et les huiles désasphaltées au solvant, seule ou en mélange. La charge hydrocarbonée dérivée du charbon peut avantageusement être choisie parmi les produits issus de la liquéfaction du charbon et les fractions aromatiques provenant de la pyrolyse ou de la gazéification de charbon et des huiles de schistes ou des produits dérivés des huiles de schistes, , seule ou en mélange, prétraitées ou non.

Dans la mesure où l'hydrogène est produit en interne lors de l'étape d'hydroreformage de la charge comprenant au moins une bio-huile, la consommation d'hydrogène pour le co-traitement en mélange avec les charges hydrocarbonées dérivées du pétrole et/ou du charbon est réduite.

De préférence, ladite charge comprenant au moins une bio-huile non prétraitée peut avantageusement être un mélange de l'une des quelconques charges citées ci-avant, lesdites charges pouvant elles, être prétraitées ou non.

### Hydroreformage

Conformément à l'invention, ladite charge comprenant au moins une bio-huile, éventuellement au moins une charge hydrocarbonée dérivée du pétrole et/ou du charbon, éventuellement d'autres composés issus de la biomasse, en mélange avec au moins une partie de la phase organique de l'effluent issu de l'étape d'hydroréformage qui est recyclée avec un taux de recycle égal au rapport du débit massique de ladite phase organique sur le débit massique de la bio-huile non prétraitée compris entre 0,05 et 2, est introduite dans ladite première étape d'hydroreformage.

La réaction est désignée ici sous le terme d' « hydroreformage » puisqu'elle amène un changement caractéristique dans la distribution des poids moléculaires de la charge comprenant au moins une bio-huile. De préférence, l'étape d'hydroreformage est considérée comme une étape d'hydrotraitement dans laquelle la bio-huile est partiellement désoxygénée et partiellement hydroconvertie avec une production partielle d'hydrogène interne à la réaction.

Au cours de ladite première étape d'hydroreformage, la bio-huile est transformée en vue de stabiliser le produit, de le rendre miscible avec les hydrocarbures, d'entraîner une séparation facile de phase de l'eau dans la bio-huile, d'abaisser sa viscosité, d'abaisser sa corrosivité, de convertir notablement les fractions de haut poids moléculaires en molécules plus petites et d'abaisser sa teneur en oxygène d'environ 50 % poids à moins de 15 % poids.

### Le produit de l'étape d'hydroreformage

Conformément à l'invention, ladite première étape d'hydroreformage permet l'obtention d'au moins un effluent liquide comprenant au moins une phase aqueuse et au moins une phase organique.

Une phase gazeuse est également avantageusement obtenue. Ladite phase gazeuse contenant majoritairement du CO₂, de l'H₂S et des gaz légers en C1-C4 tel que par exemple du méthane. Ladite phase gazeuse peut avantageusement être séparée desdites phases aqueuse et organique dans tout séparateur connu de l'homme du métier.

### Ladite phase aqueuse et ladite phase organique sont avantageusement séparée par décantation.

L'analyse de l'effluent liquide ne montre aucun signe de polymérisation.

Ladite phase aqueuse comprend de l'eau et peut également comprendre des matières organiques, principalement de l'acide acétique et du méthanol (cas de bio-huile de pyrolyse rapide), dissoutes dans ladite phase aqueuse. La phase aqueuse contient essentiellement de l'eau formée par hydro-désoxygénation et de l'eau contenue dans la bio-huile non prétraitée qui n'a pas été convertie et en général moins d'environ 20 % poids de matières organiques dissoutes. Pour les bio-huiles de pyrolyse, la phase aqueuse séparée au cours de la première étape de reformage contient typiquement environ 10 % poids d'acide acétique et une proportion plus faible de méthanol. De préférence, l'acide acétique et le méthanol sont récupérés dans la phase aqueuse car ils constituent des sous-produits valorisables. L'acide acétique peut avantageusement être récupéré par différents moyens connus tels que la distillation ou l'évaporation, la cristallisation sous forme de sel, d'une terre alcaline par exemple, ou par extraction au solvant, au moyen d'échangeurs d'ions liquides par exemple. Du fait de son point d'ébullition bas et de l'absence de formation d'azéotropes avec l'eau, le méthanol est simplement récupéré par distillation. De préférence, l'acide acétique et le méthanol pris ensemble comprennent au moins 80 % poids des composants organiques dans la phase aqueuse.

La phase organique contient de la bio-huile partiellement désoxygénée et des hydrocarbures. On entend par bio-huile partiellement désoxygénée, une bio-huile contenant moins de 25 % poids d'oxygène et de préférence moins de 15 % poids d'oxygène par rapport à la masse totale de ladite phase organique. La phase organique comprend donc moins de 25 % poids d'oxygène, de préférence moins de 15 % poids d'oxygène, de manière préférée moins de 10% poids d'oxygène par rapport à la masse totale de ladite phase organique.

Ainsi, ladite phase organique est désoxygénée à un degré suffisant pour la rendre miscible avec des charges hydrocarbonées comme celle utilisées en raffinerie de pétrole à des concentrations élevées. En général, ladite phase organique peut se mélanger librement avec la plupart des produits hydrocarbonés à des concentrations pouvant atteindre au moins 50 % poids. Par ailleurs, dans la mesure où la teneur en oxygène est sensiblement réduite et que la bio-huile est déjà partiellement convertie, les besoins en hydrogène lors d'étapes d'hydrotraitement/hydrocraquage en raffinerie sont fortement minimisés. De plus, ladite phase organique est stabilisée de manière à pouvoir être hydrotraitée/hydrocraquée en raffinerie sans risque de formation importante de solides.

La phase organique contient de préférence moins de 25% poids d'oxygène et de préférence moins de 15 % poids d'oxygène et moins de 5 % poids d'eau, de préférence moins de 2 % poids d'eau par rapport à la masse totale de ladite phase organique.. La consommation d'hydrogène au cours de ladite première étape d'hydroreformage est de préférence inférieure à environ 2 % poids de la bio-huile.

De préférence, l'indice d'acide total (TAN) est inférieur à environ 100 KOH/g d'huile. L'indice d'acide total est exprimé en mg KOH/g d'huile. C'est la quantité d'hydroxyde de potassium en milligrammes nécessaire pour neutraliser les acides dans un gramme d'huile. Il existe des méthodes standard pour déterminer l'indice d'acide, telles que les méthodes ASTM D 974 et DIN 51558 (pour huiles minérales, biodiesels), ou des méthodes spécifiques aux biodiesels utilisant la norme européenne EN 14104 et ASTM D664, largement utilisées à l'échelle mondiale.

Le pouvoir calorifique supérieur (PCS) est supérieur à environ 35 MJ/kg dans la phase organique issue de ladite première étape d'hydroreformage.

Sans être exhaustif, ladite phase organique peut par exemple être utilisée dans des procédés de raffinage comme charge d'hydrocraquage, d'hydrotraitement ou de craquage catalytique ou comme combustible industriel.

Ladite phase organique peut également être directement utilisé comme produit hydrocarboné de qualité carburant pour le transport routier, aérien ou maritime. Dans le cas où ladite phase organique est directement utilisée pour le transport maritime la qualité des carburants est assez ou très différente selon les grades considérés (carburants de type distillats DMX, DMA, DMZ, DMB ou de type fuels résiduels RMA, RMB, RMD, RME, RMG ou RMK selon la norme ISO 8217) et les spécifications particulières à ce type de carburants font que la deuxième étape d'hydrocraquage n'est en général pas nécessaire. Par contre, une deuxième étape d'hydrotraitement opérant en conditions peu sévères c'est-à-dire à VVH élevée, et sous pression d'hydrogène modérée peut avantageusement être mise en oeuvre. De préférence, ladite étape d'hydrotraitement opère avantageusement à une température comprise entre 300 et 380°C, à une pression comprise entre 3 et 8 MPa et à une VVH comprise entre 1 et 3h⁻¹.

Typiquement, lors de la première étape d'hydroreformage, les rendements en phase organique par rapport à la biomasse sèche c'est-à-dire comprenant 0% d'humidité, introduite dans l'étape de pyrolyse, est compris entre 15 et 45 % poids, et de préférence entre 15 et 40 % poids. Les rendements en phase aqueuse par rapport à la biomasse sèche sont compris entre 10 et 50 % poids, et de préférence entre 10 et 40 % poids. Les rendements en phase gazeuse par rapport à la biomasse sèche sont compris entre 5 et 30 % poids. La conversion de la fraction organique de la bio-huile en bio-huile partiellement désoxygénée représente au moins 70 % poids.

Nous avons par ailleurs découvert que la bio-huile partiellement désoxygénée et plus particulièrement la phase organique comprenant au moins ladite bio-huile partiellement désoxygénée produite par hydroreformage peut être facilement convertie en hydrocarbures entièrement désoxygénés, compatibles avec les pools carburant, au moyen de procédés mis en oeuvre de manière conventionnelle en raffinerie, tels que l'hydrotraitement ou l'hydrocraquage.

Conformément à l'invention, au moins une partie de la phase organique de l'effluent issu de la première étape d'hydroreformage est recyclée dans ladite première étape d'hydroreformage avec un taux de recycle égal au rapport du débit massique de ladite phase organique sur le débit massique de la bio-huile non prétraitée compris entre 0,05 et 2 et dans lequel l'effluent hydrocarboné issu de l'étape d'hydrotraitement et/ou d'hydrocraquage n'est pas recyclé dans ladite première étape d'hydroreformage.

De préférence, ledit taux de recycle est compris entre 0,05 et 1,5, de manière préférée, entre 0,2 et 1,3 et de manière très préférée, entre 0,3 et 1.

Les taux de recycle utilisés permettent d'avoir globalement une charge suffisamment stable thermiquement pour pouvoir être introduite dans le four de préchauffe ainsi que dans le réacteur d'hydrorefomage sans risque de colmatage, de faciliter les réactions de conversion et de désoxygénation de la bio-huile sur le catalyseur, d'améliorer la dissolution de l'hydrogène gazeux dans la phase organique recyclée issue de la première étape d'hydroréformage et de mieux gérer l'exothermicité générée par les réactions, tout en minimisant le recyclage de tout ou partie de la phase organique issue de l'hydroreformage afin de minimiser les coûts d'investissements ainsi que les coûts opératoires.

La phase organique recyclée dans ladite première étape d'hydroreformage, et issue de cette étape, sert également à abaisser la masse volumique de la bio-huile partiellement désoxygénée produite au cours cette première étape, ce qui facilite le dégagement de phase de la bio-huile partiellement désoxygénée et de la phase aqueuse en sortie d'hydroreformage. Cette séparation qui s'effectue aisément lors du refroidissement du mélange réactionnel est un autre avantage que procure la présence de la phase organique recyclée dans le mélange réactionnel de la première étape d'hydroreformage.

Autre avantage, la présence de la phase organique recyclée dans le mélange réactionnel tend à expulser l'eau de ladite phase organique, la teneur en eau étant ainsi aussi réduite que possible, ce qui est favorable à l'utilisation de ladite phase organique comme combustible industriel ou comme charge pour des étapes ultérieures d'hydrotraitement/hydrocraquage. Ainsi, ladite phase ladite phase organique issue de la première étape d'hydroreformage contient moins de 5 % poids d'eau, de préférence moins de 2 %.

Conformément à l'invention, le catalyseur mis en oeuvre dans la première étape d'hydroreformage comprend au moins un métal de transition choisi parmi les éléments des groupes 3 à 12 de la classification périodique et au moins un support choisis parmi les carbures de silicium, les silices, les alumines de transition, les silices alumine, l'oxyde de zirconium, l'oxyde de cérium, l'oxyde de titane et les aluminates de métaux de transition, pris seul ou en mélange, De préférence, le catalyseur comporte un métal du groupe 10, seul ou en combinaison avec au moins un métal des groupes 3 à 12 et de manière préférée au moins un métal des groupes 5, 6, 8, 9, 10, 11 de la classification périodique. De manière préférée, le catalyseur comporte du Ni, seul ou en combinaison avec au moins un métal choisi parmi Cr, Mo, W, Fe, Co et Cu.

La teneur en métal du groupe 10 et de préférence en nickel, exprimé en pourcentage poids d'oxyde de métal du groupe 10 est avantageusement comprise entre 1 et 20% poids, de préférence entre 5 et 15 % poids par rapport à la masse total dudit catalyseur.

Dans le cas où ledit métal du groupe 10 est utilisé en combinaison avec au moins un métal des groupes 3 à 12, la teneur en métal des groupes 3 à 12 est avantageusement comprise entre 1 et 20% poids par rapport à la masse total dudit catalyseur.

De préférence, le support est choisi parmi les silices, les alumines de transition, les silices alumines, et les aluminates de métaux de transition. Ces supports peuvent être pris seul ou en mélange.

Des catalyseurs préférés sont NiMo sur alumine ou aluminate de nickel.

De préférence, ledit catalyseur est préparé selon les méthodes classiques telles que le co-malaxage ou l'imprégnation suivis d'un ou plusieurs traitements thermiques.

Ledit catalyseur est avantageusement utilisé dans la première étape d'hydroreformage sous forme réduite ou sulfurée.

### Conditions opératoires

De préférence, ladite première étape d'hydroreformage est réalisée à une température comprise entre 250 et 450°C, de préférence entre 250 et 400 °C, et de manière préférée entre 270 et 360°C, et à une pression absolue comprise entre 3,4 et 27,6 MPa (500 et 4000 psi), de préférence entre 3,4 et 20,7 MPa (500 et 3000 psi), et de manière préférée entre 6,9 et 2,7 MPa (1000 et 3000 psi) et de manière plus préférée entre 15 et 20,7 MPa et à une vitesse spatiale horaire élevée par rapport à la bio huile, de préférence supérieure à 0,2 h⁻¹, de manière préférée comprise entre 0,5 h⁻¹ et 5 h⁻¹, et de manière plus préférée comprise entre 1 h⁻¹ et 5 h⁻¹.

De préférence, la charge comprenant au moins la bio-huile non prétraitée n'est pas préchauffée, ou seulement préchauffée à une température inférieure à 80°C avant d'être introduite dans la première étape d'hydroreformage. En effet, un chauffage prolongé ou un stockage à température élevée peut provoquer une détérioration.

Il n'y a pas de limitations concernant l'appareillage destiné à mener à bien le procédé. Celui-ci peut être conduit en mode discontinu ou continu. Néanmoins, pour des applications industrielles à grande échelle, il sera préférable d'opérer en continu.

Dans un mode de réalisation préféré, la vitesse spatiale horaire est supérieure à environ 1 kg de bio-huile par kg de catalyseur par heure.

La réaction d'hydroreformage peut être réalisée dans tout réacteur qui facilite la dispersion efficace de la bio-huile dans le mélange réactionnel. Un simple réacteur continu parfaitement agité (CSTR) est approprié en mode discontinu. Pour des applications continues, des réacteurs à lit garni à cocourant descendant, à lit mobile, à lit bouillonnant ou des réacteurs slurry seront plus adaptés. Tout en gardant le catalyseur dans le réacteur, les technologies de réacteurs à lit mobile et à lit bouillonnant présentent l'avantage de permettre le remplacement aisé du catalyseur lors d'opérations en continu, ce qui confère une plus grande souplesse au fonctionnement de l'unité, augmente le facteur de marche et maintient une activité en fonction du temps quasi-constante. Ces technologies acceptent aussi des charges contenant un peu de solides ou produisant des solides en cours de réactions, ce qui n'est pas le cas des technologie de réacteur en lit fixe, sauf à utiliser des réacteurs de gardes permutables par exemple. La technologie du réacteur slurry, selon la terminologie anglo-saxonne, présente les mêmes avantages que les technologies de réacteurs à lit mobile et à lit bouillonnant et l'avantage supplémentaire de fonctionner avec un catalyseur frais donc avec une activité maximale, mais l'inconvénient de compliquer beaucoup la récupération du catalyseur qui sort du réacteur avec les effluents. D'autres réacteurs répondant aux principes énoncés ici sont à la portée de l'homme de l'art versé dans la technologie des réacteurs chimiques et se situent dans le cadre de la présente invention.

### Consommation d'hydrogène

Au cours de la première étape d'hydroreformage, un reformage interne de la bio-huile en oxydes de carbone et hydrogène s'effectue avec un rendement relativement élevé en hydrocarbures et une consommation relative basse d'hydrogène. La consommation d'hydrogène est donc modérée au cours de la première étape d'hydroreformage et la production interne d'hydrogène par hydroreformage permet d'opérer le procédé avec une consommation d'hydrogène externe très limitée.

Une partie de l'hydrogène nécessaire à la réaction dans la première étape d'hydroreformage est générée en interne, à priori à partir de l'eau présente dans la bio-huile, en hydroreformant une portion de la bio-huile, de telle manière qu'une partie significative de l'oxygène est libérée sous forme de dioxyde de carbone, et le besoin net en hydrogène est largement inférieur que dans le cas du procédé d'hydrodésoxygénation directe. L'autre partie de l'hydrogène nécessaire à la réaction est d'origine externe. Typiquement, la consommation d'hydrogène au cours de la première étape d'hydroreformage est inférieure à environ 2 % poids de la masse de la bio-huile introduite dans le réacteur, et l'émission correspondante de CO₂ pour la produire est bien moindre que dans le cas de procédés de type hydro-désoxygénation (HDO), avec une consommation d'au moins 4 ou 5 % poids d'hydrogène externe (selon la teneur en oxygène de la charge).

L'hydrogène d'origine externe peut avantageusement être fourni à partir de ressources fossiles, par gazéification/oxydation partielle ou par reformage à la vapeur , par reformage à la vapeur de la bio-huile elle-même (bien que cela implique une perte d'efficacité énergétique du carbone), par reformage à la vapeur du méthane produit et des fractions de gaz légers et/ou de fractions comprenant des composés oxygénés légers issues de la première étape d'hydroreformage ou de l'étape ultérieure d'hydrotraitement/hydrocraquage. Il est également possible de faire réagir le CO récupéré avec l'eau produite pour obtenir de l'hydrogène au moyen de la réaction connue de conversion du gaz à l'eau par "water gas shift" selon la terminologie anglo-saxonne (WGS). Ainsi, le procédé global, depuis la biomasse jusqu'au produit hydrocarboné final, pourrait être auto-suffisant en hydrogène.

La première étape d'hydroreformage présente donc les avantages suivants :
- la bio-huile est stabilisée de manière à pouvoir être ensuite raffinée sans risque de formation de coke, elle est désoxygénée à un degré suffisant pour la rendre miscible avec des charges typiques d'hydrotraitement en raffinerie issue de coupes pétrolières,
- la teneur en oxygène dans la bio-huile est réduite, de telle manière que les besoins en hydrogène au cours d'un hydrotraitement en raffinerie soient fortement réduits, à un niveau adapté aux procédés conventionnels d'hydrotraitement/hydrocraquage de produits pétroliers
- de l'hydrogène est généré en interne à partir de l'eau présente par hydroreformage d'une portion de la bio-huile, de telle manière que la majeure partie de l'oxygène soit libérée préférentiellement sous forme de dioxyde de carbone et que les besoins nets en hydrogène externe soient limités
- le produit est essentiellement exempt d'eau, l'eau résiduelle formant une phase séparée
- la corrosivité du produit est fortement réduite dans la mesure où la majeure partie des acides organiques sont convertis ou passent dans la phase aqueuse
- des acides carboxyliques légers tels que l'acide acétique présent dans la bio-huile brute peuvent être récupérés dans la phase aqueuse et être valorisés en tant que sous-produits présentant une valeur
- seule une quantité modérée d'hydrocarbures gazeux, essentiellement du méthane, se forme
- si nécessaire, cette fraction de méthane peut être reformée au moyen du procédé dit de reformage du méthane à la vapeur (Steam Methane Reforming SMR) en vue de produire du bio-hydrogène pour les procédés d'hydroreformage ou d'hydrotraitement/hydrocraquage
- il est également possible d'utiliser le bio-charbon issu de l'étape de pyrolyse comme charge pour le réacteur de gazéification en vue de produire du gaz de synthèse (CO + H₂). Ce gaz de synthèse peut aussi être mis en oeuvre pour produire du bio-hydrogène pour les procédés d'hydroreformage et/ou d'hydrotraitement/hydrocraquage,
- ainsi, en mettant en oeuvre le procédé SMR et/ou la gazéification du bio-charbon, le procédé de conversion et de valorisation de la bio-huile peut être auto-suffisant en hydrogène, sans nécessiter l'apport d'hydrogène d'origine fossile
- le rendement pondéral en hydrocarbures est supérieur à celui obtenu par hydro-désoxygénation directe
- les conditions opératoires sont relativement modérées et la vitesse spatiale horaire est élevée (temps de séjour plus court par rapport aux procédés d'hydro-désoxygénation classiques) en mode continu. Outre l'augmentation du rendement en hydrocarbures et les besoins réduits en hydrogène, le but est de réduire à la fois les coûts d'investissement et de fonctionnement pour valoriser les bio-huiles en vue de produire une source renouvelable de produits chimiques et de carburants pour le transport à partir de biomasse lignocellulosique entière.

### Étape d'hydrotraitement et/ou d'hydrocraquage

Ladite phase organique comprenant au moins ladite bio-huile partiellement désoxygénée de l'effluent issu de la première étape d'hydroreformage contenant encore une teneur importante en oxygène, il ne s'agit donc pas d'un hydrocarbure pur et elle nécessite par conséquent un traitement ultérieur en vue de la convertir en un produit hydrocarboné de qualité carburant pour le transport routier, aérien ou maritime. Dans le cas d'une valorisation pour le transport maritime, seule une étape d'hydrotraitement dans des conditions douces peut avantageusement etre mise en oeuvre.

Conformément à l'invention, au moins une partie de ladite phase organique comprenant au moins ladite bio-huile partiellement désoxygénée de l'effluent issu de la première étape d'hydroreformage est soumise à une deuxième étape d'hydrotraitement et/ou d'hydrocraquage. Ladite deuxième étape d'hydrotraitement et/ou d'hydrocraquage opère avantageusement en présence d'hydrogène et d'un catalyseur d'hydrotraitement et/ou d'hydrocraquage, à une température supérieure à 200°C, à une pression comprise entre 2 MPa et 25 MPa et à une vitesse spatiale horaire comprise entre 0,1 h⁻¹ et 20 h⁻¹.

Au moins une partie de ladite phase organique de l'effluent issu de la première étape d'hydroreformage est éventuellement introduite dans ladite deuxième étape d'hydrotraitement et/ou d'hydrocraquage en mélange avec une charge d'origine fossile. Ladite charge d'origine fossile comporte de préférence au moins 20 % volume de composés dont le point d'ébullition est supérieur à 250°C et de manière préférée, au moins 50 % volume de composés dont le point d'ébullition est supérieur à 350°C. Ladite charge d'origine fossile est avantageusement choisie parmi les distillats atmosphériques, les distillats sous vide, tels que par exemple des distillats issus de la distillation directe de brut ou d'unités de conversion telles que des unités de craquage catalytique fluide, de cokéfaction ou de viscoréduction, les charges issues d'unités d'extraction d'aromatiques pour huiles lubrifiantes de base ou du déparaffinage au solvant d'huiles lubrifiantes de base, de distillats issus de procédés d'hydrotraitement et/ou d'hydroconversion de résidus provenant de l'hydroconversion en lit fixe ou en lit mobile ou en lit bouillonnant ou en lit à suspension de résidus atmosphériques et/ou de résidus sous vide et/ou d'huiles désasphaltées obtenues à partir de tout procédé de désasphaltage au solvant utilisant des solvants légers, et les huiles désasphaltées, ou un mélange quelconque des charges mentionnées ci-avant. La liste ci-dessus n'est pas limitative. La teneur en insolubles n-C7 de la charge globale est généralement inférieure à 5000 ppm, de préférence inférieure à 1000 ppm et de préférence encore inférieure à 200 ppm.

### Hydrotraitement

Dans un mode de réalisation préféré, ladite deuxième étape est une étape d'hydrotraitement opérant en présence d'un catalyseur hétérogène et d'hydrogène à une température comprise entre 250 et 450°C, de préférence entre 300 et 400°C, de manière préférée entre 320 et 380°C, à une pression comprise entre 2 MPa et 25 MPa, de préférence entre 5 MPa et 20 MPa et à une vitesse spatiale horaire comprise entre 0,1 h⁻¹ et 20 h⁻¹ et de préférence entre 0,5 h⁻¹ et 5 h⁻¹ et avec une quantité totale d'hydrogène mélangé à la charge (y compris la consommation chimique et la quantité recyclée) telle que le rapport volumique hydrogène/hydrocarbure est compris entre 100 et 3000 Nm³/m³ et de préférence entre 100 et 1000 Nm³/m³.

Ledit catalyseur d'hydrotraitement comprend avantageusement une phase active comprenant au moins un métal du groupe 6 choisi parmi le molybdène et le tungstène seul ou en mélange, de préférence associé à au moins un métal des groupes 8 à 10, choisis parmi le nickel et le cobalt, seul ou en mélange et un support choisi dans le groupe constitué d'alumine, de silice, de silice-alumine, de magnésie, d'argiles et de mélanges d'au moins deux de ces minéraux. Ledit support peut en outre contenir d'autres composés tels que, par exemple, des oxydes choisis dans le groupe constitué de l'oxyde de bore, la zircone, l'oxyde de titane, l'anhydride phosphorique. De manière préférée, ledit support est constitué d'alumine, et de préférence encore de l'alumine [eta], [thêta], [delta] ou [gamma].

La quantité totale d'oxydes de métaux du groupe 6 et des groupes 8 à 10 dans le catalyseur mis en oeuvre est avantageusement comprise entre 5 et 40 % poids, de préférence entre 6 et 30 % poids par rapport à la masse totale de catalyseur. Dans le cas où ledit catalyseur comprend du nickel, la teneur en oxyde de nickel est avantageusement comprise entre 0,5 et 12 % poids et de préférence entre 1 et 10 %poids. Dans le cas où le catalyseur comprend du molybdène, la teneur en oxyde de molybdène est avantageusement comprise entre 1 et 35 % poids d'oxyde de molybdène (MoO₃) et de préférence entre 5 et 30 % poids d'oxyde de molybdène, ces pourcentages étant exprimés en % poids par rapport à la masse totale de catalyseur. Ledit catalyseur utilisé dans l'étape d'hydrotraitement de la méthode selon l'invention doit être avantageusement caractérisé par un pouvoir hydrogénant élevé de manière à conduire autant que possible la sélectivité de la réaction vers une hydrogénation qui conserve le nombre d'atomes de carbone des chaînes, afin de maximiser le rendement en hydrocarbures se situant dans l'intervalle de distillation des distillats moyens. Le fait de maximiser la fonction hydrogénante permet également de limiter les réactions de polymérisation et/ou de condensation conduisant à la formation de coke susceptible de dégrader la stabilité de la performance catalytique. Un catalyseur NiMo, NiW ou CoMo sera de préférence mis en oeuvre.

Ledit catalyseur utilisé dans la deuxième étape d'hydrotraitement peut aussi avantageusement contenir au moins un élément dopant choisi parmi le phosphore et/ou le bore. Ledit élément peut avantageusement être introduit dans la matrice ou, de préférence, déposé sur le support. Il est également possible de déposer du silicium sur le support, seul ou avec du phosphore et/ou du bore. La teneur d'oxyde dans ledit élément est avantageusement inférieure à 20 %, de préférence inférieure à 10 % par rapport à la masse totale de catalyseur.

Les métaux des catalyseurs mis en oeuvre dans la deuxième étape d'hydrotraitement de la méthode selon l'invention peuvent être des métaux ou des phases métalliques sulfurés. Pour une efficacité maximale, ces catalyseurs à base d'oxydes métalliques sont habituellement convertis au moins partiellement en sulfures métalliques. Les catalyseurs à base d'oxydes métalliques peuvent être sulfurés au moyen de toute technique connue dans l'art antérieur, par exemple dans le réacteur (*in situ*) ou *ex situ*, en mettant le catalyseur en contact, à température élevée, avec une source de d'hydrogène sulfuré, tels que le diméthyle disulfure (DMDS).

Dans la mesure où la biomasse ne contient normalement qu'une très faible quantité de soufre, la mise en oeuvre de catalyseurs non sulfurés devrait permettre d'éviter tout risque de contamination au soufre dans les combustibles produits. Parmi les autres catalyseurs à base d'oxydes métalliques adaptés à l'étape d'hydrotraitement, on peut citer les phases métalliques obtenues par réduction sous hydrogène. La réduction s'effectue généralement à des températures comprises entre environ 150°C et environ 650°C, sous une pression d'hydrogène comprise entre environ 0,1 et environ 25 MPa (14,5-3625 psi).

### Hydrocraquage : hydrocraquage doux et hydrocraquage haute pression

Dans un autre mode de réalisation préféré, ladite deuxième étape est une étape d'hydrocraquage opérant avantageusement à une pression comprise entre 2 MPa et 25 MPa, à une température comprise entre 250 et 480°C, à une vitesse spatiale horaire comprise entre 0,1 h⁻¹ et 20 h⁻¹, et avec une quantité totale d'hydrogène mélangé à la charge (y compris la consommation chimique et la quantité recyclée) telle que le rapport volumique hydrogène/hydrocarbure est compris entre 80 et 5000 Nm³/m³. De préférence, au moins une partie de ladite phase organique de l'effluent issu de la première étape d'hydroreformage est soumise à une deuxième étape d'hydrocraquage en présence d'un catalyseur hétérogène et d'hydrogène.

Ladite deuxième étape d'hydrocraquage peut avantageusement être mise en oeuvre en une ou en deux étapes selon les méthodes connues de l'homme du métier.

Selon un mode de réalisation préféré, ladite deuxième étape d'hydrocraquage est un hydrocraquage doux. Dans ce cas, ladite deuxième étape d'hydrocraquage donne lieu à une conversion nette de produits dont le point d'ébullition est inférieur à 375°C est avantageusement comprise entre 5 et 50 % poids, avantageusement entre 10 et 45 % poids.

Ladite deuxième étape d'hydrocraquage doux opère avantageusement à une pression comprise entre 2 MPa et 12 MPa (290-1740 psi), de préférence entre 2 et 10 MPa (290-1450 psi), de manière préférée entre 4 et 9 MPa (580-1305 psi) et de manière plus préférée entre 3 et 7 MPa (435-1015 psi), à une température comprise entre 350 et 450°C, à une vitesse spatiale horaire comprise entre 0,2 h⁻¹ et environ 5 h⁻¹ et avec une quantité totale d'hydrogène mélangé à la charge (y compris la consommation chimique et la quantité recyclée) telle que le rapport volumique hydrogène/hydrocarbure est compris entre 100 et 2000 Nm³/m³, de manière préférée entre 200 et 1500 Nm³/m³.

Selon un mode de réalisation préféré, ladite deuxième étape d'hydrocraquage est un hydrocraquage dit haute pression. Dans ce cas, les conditions opératoires mises en oeuvre dans le procédé selon l'invention permettent d'atteindre des conversions de produits dont le point d'ébullition est inférieur à 340°C, de préférence inférieur à 370°C, supérieures à 10 % et plus, de préférence comprises entre 20 et 95 %, de préférence encore entre 50 et 95 %.

Ladite deuxième étape d'hydrocraquage dit haute pression opère avantageusement en présence d'hydrogène, à une température comprise entre 250 et 480°C, de manière préférée entre 320 et 450°C, de manière plus préférée entre 330 et 435°C, à une pression comprise entre 5 MPa et 20 MPa (725-2900 psi), la vitesse spatiale horaire étant comprise entre 0,1 h⁻¹ et 6 h⁻¹, de manière préférée entre 0,2 h⁻¹ et 3 h⁻¹, et avec une quantité d'hydrogène introduite est telle que le rapport volumique hydrogène/hydrocarbure est compris entre 100 et 2000 Nm³/m³.

Selon un mode de réalisation très préféré, ladite deuxième étape est une étape d'hydrotraitement suivie d'une étape d'hydrocraquage d'au moins une partie de la phase organique de l'effluent issu de la première étape d'hydroreformage.

L'étape d'hydrotraitement en amont de l'étape d'hydrocraquage permet de réduire les hétéroatomes potentiellement nocifs pour le(s) catalyseur(s) d'hydrocraquage. L'étape d'hydrotraitement test réalisée en présence d'un catalyseur d'hydroraffinage classique connu de l'homme du métier.

Ladite deuxième étape d'hydrotraitement et/ou l'hydrocraquage peuvent avantageusement être réalisées dans un réacteur à lit fixe ou dans un lit dit entraîné : réacteur à lit mobile, réacteur à lit bouillonnant ou réacteur à suspension. Il est possible d'utiliser un seul catalyseur ou plusieurs catalyseurs différents, simultanément ou successivement, dans le cas d'un réacteur à lit fixe. Lesdites étapes peuvent être effectuées industriellement dans un ou plusieurs réacteurs, avec un ou plusieurs lits catalytiques. L'exotherme réactionnel durant l'hydrotraitement est limité par toute méthode connue de l'homme de l'art : recyclage du produit liquide, refroidissement par l'hydrogène recyclé, etc.

Ladite deuxième étape d'hydrocraquage peut être conduite dans un ou plusieurs lits catalytiques fixes ou entraînés ou dans un lit fixe et entraîné, dans un ou plusieurs réacteurs, dans le cadre d'un schéma d'hydrocraquage à une ou deux étapes comme il est décrit dans le document US-2007/0.209.968, avec ou sans recyclage liquide de la fraction non convertie, éventuellement en combinaison avec un catalyseur d'hydroraffinage en amont du catalyseur de la présente invention.

Les catalyseurs d'hydrocraquage mis en oeuvre dans la deuxième étape d'hydrocraquage sont tous du type bifonctionnel qui combine une fonction acide et une fonction hydro-déshydrogénante. La fonction acide est fournie par des substrats qui présentent des superficies généralement comprises entre 150 et 800 m²/g et une acidité superficielle, tels que des alumines halogénées (en particulier chlorées ou fluorées), des alumines, des zéolites et des silices-alumines amorphes, ou leurs combinaisons. La fonction hydro-déshydrogénante est fournie soit par un ou plusieurs métaux des groupes 8 à 10 de la classification périodique des éléments, ou par une combinaison d'au moins un métal du groupe 6 et d'au moins un métal des groupes 8 à 10. Le catalyseur peut comporter des métaux des groupes 8 à 10, par exemple du nickel et/ou du cobalt, le plus souvent en combinaison avec au moins un métal du groupe 6, du molybdène et/ou du tungstène par exemple. Il est possible d'utiliser par exemple un catalyseur comportant entre 0,5 et 10 % poids de nickel (exprimé en termes d'oxyde de nickel NiO) et entre 1 et 30 % poids de molybdène, de préférence entre 5 et 25 % poids de molybdène (exprimé en termes d'oxyde de molybdène MoO₃), sur un substrat minéral amorphe. La teneur totale du catalyseur en oxydes de métaux du groupe 6 et des groupes 8 à 10 est généralement comprise entre 5 et 40 % masse, de préférence entre 7 et 30 % poids. Dans le cas où le catalyseur comporte au moins un métal du groupe 6 associé à au moins un métal non noble des groupes 8 à 10, le catalyseur est de préférence un catalyseur sulfuré.

Le catalyseur peut également contenir un élément promoteur tel que le phosphore et/ou le bore. Cet élément peut avoir été introduit dans la matrice ou, de préférence, déposé sur le substrat. Du silicium peut aussi avoir été déposé sur le substrat, seul ou avec du phosphore et/ou du bore. Les catalyseurs contiennent de préférence du silicium déposé sur un substrat tel que de l'alumine, éventuellement avec du phosphore et/ou du bore déposé(s) sur le substrat et contenant également au moins un métal des groupes 8 à 10 (Ni, Co) et au moins un métal du groupe 6 (Mo, W). La concentration dudit élément est habituellement inférieure à environ 20 % poids (base oxyde) et le plus souvent inférieure à environ 10 % poids. La concentration du trioxyde de bore (B₂O₃) est habituellement comprise entre 0 et 10 % poids.

D'autres catalyseurs conventionnels comportent une zéolite Y de type FAU, un support amorphe (généralement de l'alumine) et au moins un métal ou composé métallique ayant une fonction hydro-déshydrogénante (généralement au moins un métal du groupe 6 et des groupes 8 à 10, de préférence au moins un métal du groupe 6 et au moins un métal non noble des groupes 8 à 10).

Autre exemple de catalyseurs appropriés, les catalyseurs dits composites décrits dans le document US-2007/0.209.968, qui comprennent au moins un métal ou un composé métallique ayant une fonction hydro-déshydrogénante choisi dans le groupe 6 et les groupes 8 à 10, un support à base de silice-alumine et au moins un support zéolitique.

Le catalyseur d'hydrocraquage comporte de préférence au moins un métal des groupes 8 à 10 choisi parmi le Ni et/ou le Co, et au moins un métal du groupe 6 choisi parmi le Mo et/ou le W, sur un support en silice-alumine et/ou en zéolite.

Avant l'injection de la charge, les catalyseurs mis en oeuvre dans le procédé selon la présente invention sont de préférence soumis à un traitement préalable de sulfuration afin de transformer, au moins en partie, les espèces oxydes en sulfures avant leur mise en contact avec la charge à traiter. Le traitement d'activation par sulfuration est connu de l'homme de l'art et peut être réalisé à l'aide de toute méthode déjà décrite dans la littérature, soit *in situ*, c'est-à-dire dans le réacteur, soit *ex situ*.

L'effluent hydrocarboné obtenu à l'issue de la deuxième étape d'hydrotraitement et/ou d'hydrocraquage est un effluent hydrocarboné liquide complètement désoxygéné. Ledit effluent liquide hydrocarboné comprend une teneur en composés hydrocarbonés avantageusement supérieure à 98 % poids et de préférence supérieure à 98,9% poids. Ledit effluent comprend également avantageusement moins de 1 % poids d'oxygène et moins de 0,1 % poids d'eau par rapport à la masse totale dudit effluent.

Le pouvoir calorifique supérieur (PCS) dudit effluent liquide hydrocarboné est d'environ 45 MJ/kg, ce qui est comparable à celui du diesel. Le point final d'ébullition dudit effluent liquide hydrocarboné, mesuré par distillation simulée par chromatographie en phase gazeuse, selon la méthode ASTM D2887 par exemple, est inférieur à environ 500°C, de préférence inférieur à 450°C.

Le rendement global en effluent liquide hydrocarboné obtenu à l'issue de la deuxième étape d'hydrotraitement et/ou hydrocraquage par rapport à la biomasse sèche est avantageusement compris entre 10 et 48% poids et de préférence entre 10 et 40% poids. La consommation d'hydrogène au cours de la seconde étape est de préférence inférieure à 2 % poids par rapport à la masse de bio-huile introduite. Ceci équivaut à une consommation d'hydrogène au cours de la seconde étape est de préférence inférieure à 4 % poids par rapport à la masse d'effluent organique envoyé à ladite deuxième étape.

Ledit effluent liquide hydrocarboné issu de la deuxième étape d'hydrotraitement et/ou d'hydrocraquage subit avantageusement une étape de distillation pour obtenir des coupes de bases carburant incorporable au pool gazole, kérosène.

La bio-huile issue de la pyrolyse rapide de la biomasse est introduite via une conduite, en mélange avec de l'hydrogène et la phase organique issue de l'étape d'hydroreformage dans la première zone d'hydroreformage. L'effluent liquide issu de la zone d'hydroreformage par la conduite est introduit dans un séparateur. Une phase gazeuse contenant majoritairement du CO₂, de l'H₂S et des gaz légers en C1-C4 tel que par exemple du méthane est séparée via la conduite et une phase aqueuse est également séparée via la conduite. Une phase organique contenant la bio-huile partiellement désoxygénée et des hydrocarbures est soutirée par la conduite et une partie de ladite phase organique est recyclée dans la zone d'hydroreformage. La partie non recyclée de ladite phase organique est ensuite envoyée dans une deuxième zone d'hydrotraitement et/ou d'hydrocraquage. L'effluent liquide hydrocarboné issu de la deuxième étape d'hydrotraitement et/ou d'hydrocraquage subit ensuite une étape de distillation pour obtenir différentes coupes de bases carburant incorporable au pool gazole, kérosène.

Les exemples ci-dessous illustrent l'invention sans en limiter la portée.

Les expériences ont été conduites avec une bio-huile obtenue par pyrolyse rapide de mélanges de bois dur. Les conditions opératoires de la pyrolyse rapide sont une température de 500°C et un temps de séjour des vapeurs de l'ordre de la seconde Le tableau 1 ci-après présente les données obtenues suite à l'analyse de cette bio-huile.

**Tableau 1 : Analyse de la bio-huile**

| | |
|---|---|
| Masse volumique à 20 °C, g/cm³ | 1,21 |
| Viscosité cynématique à 20 °C, mm²/s | 182,6 |
| pH | 2,5 |
| Pouvoir calorifique supérieur, MJ/kg ^{a} | 18,03 |
| Pouvoir calorifique inférieur, MJ/kg ^{b} | 16,46 |
| Teneur en eau, % masse | 20,7 |
| Lignine pyrolytique, % masse | 19,0 |
| Carbone, % masse | 43,9 |
| Hydrogène, % masse | 7,39 |
| Azote, % masse | <0,05 |
| Oxygène, % masse | 47,3 |
| Soufre (ppm) | 92 |

| | |
|---|---|
| ^{a} Le Pouvoir Calorifique Supérieur est mesuré avec une bombe calorimétrique, ^{b} le Pouvoir Calorifique Inférieur est calculé au moyen de l'équation suivante : LHV (J/g) = HHV (J/g) - 218.13*H % (% pds) | |

### Exemple 1 : Préparation des catalyseurs d'hydroreformage C1 sur un support de charbon actif (exemple comparatif) et C2 sur un support d'alumine (selon l'invention)

Le catalyseur C1 est un catalyseur de formulation NiCr/C. Les précurseurs de nickel et chrome, sous leur forme nitrate (respectivement Ni(NO₃)₂ et Cr(NO₃)₃), sont fournis par Aldrich. Le support est un charbon actif sous forme d'extrudé cylindrique fourni par la société Norit (RX3 Extra). Ce catalyseur C1 est obtenu par imprégnation à sec d'une solution aqueuse contenant les précurseurs de nickel et de chrome. Le volume de solution est égal au volume de reprise en eau du support (c'est-à-dire le volume d'eau maximum pouvant pénétrer dans sa porosité). Les concentrations en précurseurs de nickel et chrome en solution sont déterminées de manière à obtenir les teneurs cibles sur le catalyseur final : 10 %pds de nickel et 5%pds de chrome. Après imprégnation de cette solution aqueuse, le catalyseur est laissé à maturer à température ambiante pendant 4 heures dans une enceinte saturée en eau, puis séché en étuve à 70°C sous air pendant 3 heures et enfin subit un traitement thermique à 300°C pendant 3 heures sous azote (à un débit de 1,5 L/h/g de catalyseur).

Le catalyseur C2 est de formulation NiMo/δ-alumine. Le support est une alumine de transition de structure delta et se présente sous forme d'extrudé trilobe. Ce support est obtenu par déshydratation de boehmite en alumine de transition. Au préalable la poudre de boehmite subit une étape de malaxage/extrusion afin d'obtenir de la boehmite mis en forme en extrudé trilobe. Le support δ-alumine du catalyseur est finalement obtenu après calcination à 900°C sous air de la boehmite mis en forme. Les teneurs cibles pour ce catalyseur sont respectivement 6 %pds pour le nickel et 5 %pds pour le molybdène. Le protocole de synthèse consiste à réaliser une imprégnation à sec d'une solution d'heptamolybdate d'ammonium et de nitrate de nickel. Les concentrations des précurseurs dans la solution sont ajustées de manière à déposer sur le support les teneurs pondérales en métaux. Le solide est ensuite laissé à maturer à température ambiante durant 12 heures dans une enceinte saturée en eau, puis séché en étuve à 120°C sous air durant 3 heures. Finalement, le solide est calciné à 500°C durant 2 heures sous flux d'air (à un débit de 1 L/h/g de catalyseur).

**Tableau 1. Formulation des catalyseurs C1 et C2.**

| Catalyseur | C1 (comparatif) | C2 (selon l'invention) |
|---|---|---|
| Support | Charbon actif | alumine |
| Ni (%pds) | 10,2 | 6,3 |
| Cr (%pds) | 4,9 | - |
| Mo (%pds) | - | 5,1 |

### Exemple 2 : Production d'un liquide hydrocarboné à partir d'une bio-huile non prétraité avec un taux de recycle de 0,33

Cet exemple illustre la production d'un liquide hydrocarboné exempt d'oxygène à partir d'une charge bio-huile non prétraité avec les caractéristiques décrites dans le tableau 1 en mélange avec une phase liquide organique issue de la première étape d'hydroreformage selon un ratio 1:3 (phase liquide organique:bio-huile) simulant un taux de recycle de 0,33. La charge contenant la bio-huile non pré-traité est d'abord introduit dans réacteur à autoclave avec un catalyseur d'hydroreformage pour la première étape d'hydroreformage.

15 g du catalyseur C1 préparé selon l'exemple 1 sont réduits dans une cellule de réduction à 300°C pendant 3 h sous 30 NL/h d'hydrogène puis introduits, en sac à gant sous inerte, dans un panier lequel est placé dans le réacteur autoclave avec 75 g de bio-huile et 25 g de la phase liquide organique issu de l'étape d'hydroreformage. Le réacteur est fermé de façon étanche et purgé à l'azote puis à l'hydrogène. Le réacteur est ensuite mis sous pression à 4,83 MPa (700 psia) avec 18,37 NL de H₂, puis graduellement chauffé sous agitation à 330°C et maintenu à cette température pendant 3 heures durant lesquelles la pression maximale atteinte était de 13,9 MPa (2016 psia). La vitesse spatiale équivalente, définie comme le rapport du volume de bio-huile introduit sur le produit du volume de catalyseur par la durée du test, est égale à 0,7 h⁻¹. Le réacteur est ensuite rapidement refroidi et ramené à la température ambiante, ce qui ramène la pression à 1,17 MPa (170 psia). La phase gaz de réaction produit, 4,9 NL au total, est envoyé dans une bouteille collectrice et analysé. L'analyse par chromatographie en phase gazeuse indique qu'il contient 63,9 % de H₂, 21,6 % de CO₂, 10,6 % de CH₄ et 3,0 % de CO en volume.

Le panier contenant le catalyseur est récupéré hors du liquide produit, qui est séparé en 50,33 g d'une phase huile liquide organique homogène supérieure de densité 980 kg/m³ et 38,37 g d'une phase aqueuse inférieure. Aucun dépôt de goudron n'est observé dans le réacteur. La phase liquide organique contient 13,93 % poids d'oxygène élémentaire et 4,68 % poids d'eau (2,36 g) d'eau, déterminée par analyse élémentaire et dosage Karl-Fischer.

La consommation nette globale d'hydrogène s'élève à 15,26 NL (1,39 g), ce qui correspond à environ 1,85 % poids par rapport à la masse de bio-huile introduite. A partir des données ci-dessus, les rendements en phase liquide organique et phase aqueuse sont déterminés à 27,8 % et 21,2 % poids, respectivement, sur la base de la biomasse sèche contenant 0 % d'humidité.

La phase liquide organique issue l'étape d'hydroreformage est ensuite envoyée dans un réacteur en lit fixe traversé en présence d'un catalyseur conventionnel d'hydrotraitement pour la seconde étape d'hydrotraitement (HDT). Le catalyseur d'hydrotraitement utilisé comprend 4,3 % poids de NiO, 21 % poids de MoO₃ et 5 % poids de P₂O₅ supporté sur une alumine gamma. Préalablement au test, ce catalyseur est sulfuré in-situ à une température de 350 °C, à l'aide d'une charge contenant de l'heptane additivée de 2 % en poids diméthyldisulfure (DMDS).

25 mL/h de la phase liquide organique issue de l'étape d'hydroreformage est introduit dans un réacteur isotherme et à lit fixe chargé de 25 mL de catalyseur d'hydrotraitement. La vitesse spatiale correspondante est égale à 1 h⁻¹. 800 Nm³ d'hydrogène/m³ de charge sont introduits dans le réacteur maintenu à une température de 320°C et à une pression de 10 MPa (1450 psia). Afin de maintenir le catalyseur à l'état sulfure, on ajoute à la charge 50 ppm poids de soufre sous forme de DMDS. Dans les conditions de réactions, le DMDS est totalement décomposé pour former du méthane et de l'H₂S.

Le test est opéré pendant 1 h et a permis de récupérer 19,63 g d'une phase liquide hydrocarbonée de densité 842 kg/m³, contenant 0,12 % poids d'eau, 0,2 % poids d'oxygène élémentaire (limite de quantification de l'analyseur) et 99,7 % poids d'hydrocarbures. La consommation nette d'hydrogène correspond à 2,2 % poids par rapport à la masse d'effluent organique envoyé à l'étape d'hydrotraitement, ce qui correspond à une consommation nette d'hydrogène de 0,9% poids par rapport à la bio-huile. Le rendement global en liquide hydrocarboné est égale à 21,4 % poids sur la base de la biomasse sèche.

Ces résultats montrent qu'un produit hydrocarboné totalement désoxygéné peut être obtenu par hydroreformage de la bio-huile avec un taux de recycle de l'effluent organique issu de l'étape d'hydroreformage de 0,33 et le catalyseur C1, suivi d'un hydrotraitement de l'effluent organique issu de l'étape d'hydroreformage sans recyclage du produit hydrocarboné issu de l'étape d'hydrotraitement dans l'étape d'hydroreformage.

### Exemple 3 : Production d'un liquide hydrocarboné à partir d'une bio-huile non prétraité avec un taux de recycle de 1

Cet exemple reprend les conditions de l'exemple 2 à la différence que la bio-huile non prétraité est introduite en mélange avec la phase liquide organique issue de l'étape d'hydroreformage avec un ratio 1:1 simulant un taux de recycle de 1 et le catalyseur d'hydroreformage est différent.

15 g du catalyseur C2 préparés selon l'exemple 1 sont réduits dans une cellule de réduction à 400°C pendant 3 h sous 30 NL/h d'hydrogène puis introduits, en sac à gant sous inerte, dans un panier lequel est placé dans le réacteur autoclave avec 50 g de bio-huile et 50 g de la phase liquide organique issu de l'étape d'hydroreformage. L'autoclave est fermé de façon étanche, mis sous pression à 6,7 MPa (971 psia) avec 25,43 NL de H₂, puis graduellement chauffé sous agitation à 330°C, maintenu à cette température pendant 3 heures durant lesquelles la pression maximale atteinte était de 17,3 MPa (2509 psia). La vitesse spatiale équivalente, définie comme le rapport du volume de bio-huile introduit sur le produit du volume de catalyseur par la durée du test, est égale à 0,8 h⁻¹. Le réacteur est ensuite rapidement refroidi et ramené à la température ambiante, ce qui ramène la pression à 3,1 MPa (449 psia). La phase gaz de réaction produit, 18,63 L PTN au total, est évacué et analysé. L'analyse par chromatographie en phase gazeuse indique qu'il contient 85,9 % de H₂, 6,9 % de CO₂, 0,9 % de CO, 2,2 % de CH₄ et 3,1 % de C2+ en volume.

Le panier contenant le catalyseur est récupéré hors du liquide produit, qui est séparé en 70,43 g d'une phase huile liquide organique homogène supérieure de densité 950 kg/m³ et 22,78 g d'une phase aqueuse inférieure. Aucun dépôt de goudron n'est observé dans le réacteur. La phase liquide organique contient 9,74 % poids d'oxygène élémentaire et 0,98 % poids d'eau (0,84 g) d'eau, déterminée par analyse élémentaire et dosage Karl-Fischer.

La consommation nette globale d'hydrogène s'élève à 9,45 NL (0,844 g), ce qui correspond à environ 1,69 % poids sur la base de la bio-huile que l'on a fait réagir. A partir des données ci-dessus, les rendements en phase liquide organique et phase aqueuse sont déterminés à 31,6 % et 10,2 % poids, respectivement, sur la base de la biomasse sèche contenant 0 % d'humidité.

La seconde étape d'hydrotraitement de la phase liquide organique issue de l'étape d'hydroreformage est réalisée selon les conditions opératoires décrites dans l'exemple 3. Le catalyseur d'hydrotraitement de l'exemple 3 est utilisé pour cette exemple. Il est préalablement au test sulfuré in-situ à une température de 350 °C, à l'aide d'une charge heptane additivée de 2 % en poids diméthyldisulfure (DMDS). 50 ppm poids de soufre sous forme de DMDS est également ajouté à la charge pour maintenir le catalyseur à l'état sulfure.

21,34 g d'une phase liquide hydrocarbonée de densité 830 kg/m³, contenant 0,01 % poids d'eau, 0,2 % poids d'oxygène élémentaire (limite de quantification de l'analyseur) et 99,8 % masse d'hydrocarbures est récupérée après 1 h d'opération du test. La consommation nette d'hydrogène correspond à 1,8 % poids par rapport à la masse d'effluent organique envoyé à l'étape d'hydrotraitement, ce qui correspond à une consommation nette d'hydrogène de 0,8% poids par rapport à la bio-huile. Le rendement global en liquide hydrocarboné est égale à 25,6 % poids sur la base de la biomasse sèche.

Ces résultats montrent qu'un produit hydrocarboné totalement désoxygéné conforme à l'invention peut être obtenu par hydroreformage de la bio-huile avec un taux de recycle de l'effluent organique issu de l'étape d'hydroreformage de 1 et un catalyseur C2 suivi d'un hydrotraitement de l'effluent organique issu de l'étape d'hydroreformage sans recyclage du produit hydrocarboné issu de l'étape d'hydrotraitement dans l'étape d'hydroreformage.

## Revendications

1. Procédé de production de produits hydrocarbonés à partir d'une charge comprenant au moins une bio-huile non prétraitée, ladite charge étant introduite dans au moins les étapes suivantes :
- une première étape d'hydroreformage en présence d'hydrogène et d'un catalyseur d'hydroreformage comprenant au moins un métal de transition choisi parmi les éléments des groupes 3 à 12 de la classification périodique et au moins un support choisis parmi les carbures de silicium, les silices, les alumines de transition, les silices alumine, l'oxyde de zirconium, l'oxyde de cérium, l'oxyde de titane et les aluminates de métaux de transition, pris seul ou en mélange, pour obtenir au moins un effluent liquide comprenant au moins une phase aqueuse et au moins une phase organique,
- une deuxième étape d'hydrotraitement et/ou d'hydrocraquage d'au moins une partie de la phase organique de l'effluent issu de la première étape d'hydroreformage pour obtenir un effluent hydrocarboné,
dans lequel au moins une partie de la phase organique de l'effluent issu de la première étape d'hydroreformage est recyclée dans ladite première étape d'hydroreformage, en mélange avec ladite charge comprenant au moins une bio-huile, avec un taux de recycle égal au rapport du débit massique de ladite phase organique sur le débit massique de la bio-huile non prétraitée compris entre 0,05 et 2 et dans lequel l'effluent hydrocarboné issu de l'étape d'hydrotraitement et/ou d'hydrocraquage n'est pas recyclé dans ladite première étape d'hydroreformage.

2. Procédé selon la revendication 1, dans lequel ledit taux de recycle est compris entre 0,05 et 1,5,

3. Procédé selon la revendications 2, dans lequel ledit taux de recycle est compris entre 0,2 et 1,3.

4. Procédé selon la revendications 3, dans lequel ledit taux de recycle est compris entre 0,3 et 1.

5. Procédé selon l'une des revendications 1 à 4, dans lequel la bio-huile est produite par pyrolyse rapide à partir d'une charge de biomasse.

6. Procédé selon l'une des revendications 1 à 5, dans lequel ledit catalyseur d'hydroreformage comporte du Ni, seul ou en combinaison avec au moins un métal choisi parmi Cr, Mo, W, Fe, Co et Cu.

7. Procédé selon l'une des revendications 1 à 6, dans lequel le support dudit catalyseur d'hydroreformage est choisi parmi les silices, les alumines de transition, les silices alumines, et les aluminates de métaux de transition, seul ou en mélange.

8. Procédé selon l'une des revendications 1 à 5, dans lequel ledit catalyseur d'hydroreformage est un catalyseur NiMo sur alumine ou aluminate de nickel.

9. Procédé selon l'une des revendications 1 à 8, dans lequel ladite première étape d'hydroreformage est réalisée à une température comprise entre 250°C et 450°C, à une pression absolue comprise entre 3,4 et 27,6 MPa, à une vitesse spatiale horaire supérieure à 0,2 h⁻¹.

10. Procédé selon l'une des revendications 1 à 9, dans lequel ladite deuxième étape d'hydrotraitement et/ou d'hydrocraquage opère en présence d'hydrogène et d'un catalyseur d'hydrotraitement et/ou d'hydrocraquage, à une température supérieure à 200°C, à une pression comprise entre 2 MPa et 25 MPa et à une vitesse spatiale horaire comprise entre 0,1 h⁻¹ et 20 h⁻¹.

11. Procédé selon la revendication 10, dans lequel au moins une partie de ladite phase organique de l'effluent issu de l'étape d'hydroreformage est introduite dans ladite deuxième étape d'hydrotraitement et/ou d'hydrocraquage en mélange avec une charge d'origine fossile.

12. Procédé selon l'une des revendications 1 à 11, dans lequel ladite deuxième étape est une étape d'hydrotraitement opérant en présence d'un catalyseur hétérogène et d'hydrogène à une température comprise entre 250°C et 450°C, à une pression comprise entre 2 MPa et 25 MPa, et à une vitesse spatiale horaire comprise entre 0,1 h⁻¹ et 20 h⁻¹.

13. Procédé selon l'une des revendications 1 à 11, dans lequel ladite deuxième étape est une étape d'hydrocraquage opérant en présence d'un catalyseur hétérogène et d'hydrogène à une pression comprise entre 2 MPa et 25 MPa, à une température comprise entre 250°C et 480°C, à une vitesse spatiale horaire comprise entre 0,1 h⁻¹ et 20 h⁻¹, et avec une quantité totale d'hydrogène mélangé à la charge (telle que le rapport volumique hydrogène/hydrocarbure est compris entre 80 et 5000 Nm³/m³.

14. Procédé selon la revendication 13, dans lequel ladite deuxième étape est une étape d'hydrotraitement suivie d'une étape d'hydrocraquage d'au moins une partie de la phase organique de l'effluent issu de la première étape d'hydroreformage.

## Patentansprüche

1. Verfahren zur Herstellung von Kohlenwasserstoffprodukten aus einer Charge, umfassend mindestens ein nicht-vorbehandeltes Bioöl, wobei die Charge in mindestens den folgenden Schritten eingebracht wird:
- einem ersten Schritt der Hydroreformierung in Anwesenheit von Wasserstoff und eines Hydroreformierungskatalysators, umfassend mindestens ein Übergangsmetall, ausgewählt aus den Elementen der Gruppen 3 bis 12 des Periodensystems, und mindestens einen Träger, ausgewählt aus Siliciumcarbiden, Siliciumdioxiden, Übergangsaluminiumoxiden, Siliciumdixoid/Aluminiumoxid, Zirconiumoxid, Ceriumoxid, Titanoxid und Übergangsmetallaluminaten, allein oder in Mischung, um mindestens einen flüssigen Abstrom zu erhalten, umfassend mindestens eine wässrige Phase und mindestens eine organische Phase,
- einem zweiten Schritt der Hydrobehandlung und/oder des Hydrocrackens mindestens eines Teils der organischen Phase des Abstroms aus dem ersten Hydroreformierungsschritt, um einen Kohlenwasserstoffabstrom zu erhalten,
wobei mindestens ein Teil der organischen Phase des Abstroms aus dem ersten Hydroreformierungsschritt in den ersten Hydroreformierungsschritt rückgeführt wird, in Mischung mit der Charge, umfassend mindestens ein Bioöl, mit einer Rückführungsrate gleich dem Verhältnis des Massendurchsatzes der organischen Phase zum Massendurchsatz des nicht-vorbehandelten Bioöls zwischen 0,05 und 2, und wobei der Kohlenwasserstoffabstrom aus dem Hydrobehandlungs- und/oder Hydrocrackschritt nicht in den ersten Hydroreformierungsschritt rückgeführt wird.

2. Verfahren nach Anspruch 1, wobei die Rückführungsrate zwischen 0,05 und 1,5 beträgt.

3. Verfahren nach Anspruch 2, wobei die Rückführungsrate zwischen 0,2 und 1,3 beträgt.

4. Verfahren nach Anspruch 3, wobei die Rückführungsrate zwischen 0,3 und 1 beträgt.

5. Verfahren nach einem der Ansprüche 1 bis 4, wobei das Bioöl durch schnelle Pyrolyse aus einer Biomassecharge hergestellt wird.

6. Verfahren nach einem der Ansprüche 1 bis 5, wobei der Hydroreformierungskatalysator Ni, allein oder in Kombination mit mindestens einem Metall, ausgewählt aus Cr, Mo, W, Fe, Co und Cu, umfasst.

7. Verfahren nach einem der Ansprüche 1 bis 6, wobei der Träger des Hydroreformierungskatalysators ausgewählt wird aus Siliciumdioxiden, Übergangsaluminiumoxiden, Siliciumdioxid/Aluminiumoxid und Übergangsmetallaluminaten, allein oder in Mischung.

8. Verfahren nach einem der Ansprüche 1 bis 5, wobei der Hydroreformierungskatalysator ein NiMo-auf-Aluminiumoxid- oder Nickelaluminat-Katalysator ist.

9. Verfahren nach einem der Ansprüche 1 bis 8, wobei der erste Hydroreformierungsschritt bei einer Temperatur zwischen 250 °C und 450 °C, bei einem absoluten Druck zwischen 3,4 und 27,6 MPa, bei einer Raumgeschwindigkeit pro Stunde von mehr als 0,2 h⁻¹ durchgeführt wird.

10. Verfahren nach einem der Ansprüche 1 bis 9, wobei der zweite Hydrobehandlungs- und/oder Hydrocrackschritt in Anwesenheit von Wasserstoff und eines Hydrobehandlungs- und/oder Hydrocrackkatalysators, bei einer Temperatur von mehr als 200 °C, bei einem Druck zwischen 2 MPa und 25 MPa und bei einer Raumgeschwindigkeit pro Stunde zwischen 0,1 h⁻¹ und 20 h⁻¹ betrieben wird.

11. Verfahren nach Anspruch 10, wobei mindestens ein Teil der organischen Phase des Abstroms aus dem Hydroreformierungsschritt in den zweiten Hydrobehandlungs- und/oder Hydrocrackschritt in Mischung mit einer Charge fossilen Ursprungs eingebracht wird.

12. Verfahren nach einem der Ansprüche 1 bis 11, wobei der zweite Schritt ein Hydrobehandlungsschritt ist, der in Anwesenheit eines heterogenen Katalysators und von Wasserstoff bei einer Temperatur zwischen 250 °C und 450 °C, bei einem Druck zwischen 2 MPa und 25 MPa und bei einer Raumgeschwindigkeit pro Stunde zwischen 0,1 h⁻¹ und 20 h⁻¹ betrieben wird.

13. Verfahren nach einem der Ansprüche 1 bis 11, wobei der zweite Schritt ein Hydrocrackschritt ist, der in Anwesenheit eines heterogenen Katalysators und von Wasserstoff bei einem Druck zwischen 2 MPa und 25 MPa, bei einer Temperatur zwischen 250 °C und 480 °C, bei einer Raumgeschwindigkeit pro Stunde zwischen 0,1 h⁻¹ und 20 h⁻¹ und mit einer Gesamtmenge an Wasserstoff betrieben wird, die der Charge derart beigemischt wird, dass das Volumenverhältnis von Wasserstoff/Kohlenwasserstoff zwischen 80 und 5000 Nm³/m³ beträgt.

14. Verfahren nach Anspruch 13, wobei der zweite Schritt ein Hydrobehandlungsschritt ist, gefolgt von einem Hydrocrackschritt mindestens eines Teils der organischen Phase des Abstroms aus dem ersten Hydroreformierungsschritt.

## Claims

1. A process for the production of hydrocarbon products from a feed comprising at least one non-pre-treated bio-oil, said feed being introduced in at least the following steps:
• a first step for hydroreforming in the presence of hydrogen and a hydroreforming catalyst comprising at least one transition metal selected from elements from groups 3 to 12 of the periodic classification of the elements and at least one support selected from silicon carbides, silicas, transition aluminas, silica-aluminas, zirconium oxide, cerium oxide, titanium oxide and transition metal aluminates, used alone or as a mixture, in order to obtain at least one liquid effluent comprising at least one aqueous phase and at least one organic phase;
• a second step for hydrotreatment and/or hydrocracking of at least a portion of the organic phase of the effluent obtained from the first hydroreforming step in order to obtain a hydrocarbon effluent;
in which at least a portion of the organic phase of the effluent obtained from the first hydroreforming step is recycled to said first hydroreforming step as a mixture with said feed comprising at least one bio-oil, with a recycle ratio equal to the ratio of the mass flow rate of said organic phase to the mass flow rate of the non-pre-treated bio-oil in the range 0.05 to 2 and in which the hydrocarbon effluent obtained from the hydrotreatment and/or hydrocracking step is not recycled to said first hydroreforming step.

2. The process as claimed in claim 1, in which said recycle ratio is in the range 0.05 to 1.5.

3. The process as claimed in claim 2, in which said recycle ratio is in the range 0.2 to 1.3.

4. The process as claimed in claim 3, in which said recycle ratio is in the range 0.3 to 1.

5. The process as claimed in one of claims 1 to 4, in which the bio-oil is produced by fast pyrolysis starting from a biomass feed.

6. The process as claimed in one of claims 1 to 5, in which said hydroreforming catalyst comprises Ni, alone or in combination with at least one metal selected from Cr, Mo, W, Fe, Co and Cu.

7. The process as claimed in one of claims 1 to 6, in which the support for said hydroreforming catalyst is selected from silicas, transition aluminas, silica-aluminas and transition metal aluminates, used alone or as a mixture.

8. The process as claimed in one of claims 1 to 5, in which said hydroreforming catalyst is a NiMo on alumina or nickel aluminate.

9. The process as claimed in one of claims 1 to 8, in which said first hydroreforming step is carried out at a temperature in the range 250°C to 450°C, at an absolute pressure in the range 3.4 to 27.6 MPa and at an hourly space velocity of more than 0.2 h⁻¹.

10. The process as claimed in one of claims 1 to 9, in which said second hydrotreatment and/or hydrocracking step is operated in the presence of hydrogen and a hydrotreatment and/or hydrocracking catalyst at a temperature of more than 200°C, at a pressure in the range 2 MPa to 25 MPa and at an hourly space velocity in the range 0.1 h⁻¹ to 20 h⁻¹.

11. The process as claimed in claim 10, in which at least a portion of said organic phase of the effluent obtained from the hydroreforming step is introduced into said hydrotreatment and/or hydrocracking step as a mixture with a feed of fossil origin.

12. The process as claimed in one of claims 1 to 11, in which said second step is a hydrotreatment step operated in the presence of a heterogeneous catalyst and hydrogen at a temperature in the range 250°C to 450°C, at a pressure in the range 2 MPa to 25 MPa, and at an hourly space velocity in the range 0.1 h⁻¹ to 20 h⁻¹.

13. The process as claimed in one of claims 1 to 11, in which said second step is a hydrocracking step operated in the presence of a heterogeneous catalyst and hydrogen at a pressure in the range 2 MPa to 25 MPa, at a temperature in the range 250°C to 480°C, at an hourly space velocity in the range 0.1 h⁻¹ to 20 h⁻¹, and with a total quantity of hydrogen mixed with the feed such that the hydrogen/hydrocarbon volume ratio is in the range 80 to 5000 Nm³/m³.

14. The process as claimed in claim 13, in which said second step is a hydrotreatment step followed by a step for hydrocracking at least a portion of the organic phase of the effluent obtained from the first hydroreforming step.
